# EUROPEAN PATENT SPECIFICATION

(11) **EP 2 706 332 B1**
(45) Date of publication and mention of the grant of the patent: **03.05.2017**
(21) Application number: 13182365.0
(22) Date of filing: 30.08.2013
(51) Int. Cl.: G01K 11/16

(54) **TEMPERATURE INDICATOR FOR REFRIGERATING APPARATUS**
Temperaturanzeige für Kühlvorrichtung
Indicateur de température pour appareil de réfrigération

(30) Priority: 05.09.2012 IT MI20121484
(43) Date of publication of application: 12.03.2014
(73) Proprietor: I.P.S. International Products & Services S.r.l., 20097 S. Donato Milanese (Milano) (IT)
(72) Inventor: Pasotti, Gino, I-20097 San Donato Milanese (MI) (IT)
(74) Representative: Belloni, Giancarlo

(56) References cited:
- GB-A- 2 312 955
- US-A1- 2010 012 018

## Description

The present invention relates to a device for indicating the correct operating temperature for refrigerating apparatus in general, such as refrigerators and freezers for domestic, commercial or industrial use, cold rooms and the like, which takes the form of an adhesive label with different formats depending on the type of apparatus to which it is applied.

The problem of controlling in the continuous manner the temperature present inside refrigerating apparatus is of increasingly major importance for the protection of public health, owing to the great risk posed by the breeding of bacteria and germs which may contaminate the food contained in such apparatus and cause infectious diseases which in some cases may be epidemic in nature.

A specific problem of this kind consists in the possible presence of the bacterium *Listeria monocytogenes*, a bacterium discovered by the British doctor Joseph Lister, of the aerobic gram-positive type, which possesses great mobility and which attacks the immune system and causes the illness which is known as listeriosis.

For this reason different types of temperature indicators for refrigerators have been developed, these including in particular adhesive labels based on cholesteric or chiral nematic liquid crystals which are intended to indicate in a fast, practical and hygienic manner, by means of a colour change where the symbol is first visible and then becomes invisible, the correct operating temperature of said refrigerating apparatus and domestic refrigerators, whatever their climate class.

GB2312955 discloses the use of a thermochromic composition for monitoring temperature in a heat exchanger plate for a refrigerator.

US 2010/012018 discloses co-topo-polymeric indicator compositions which undergo a color change in response to e.g. temperature.

The present invention concerns a temperature indicator device which represents a further development of and improvement to the characteristics and the operation of this type of label, since the symbol is clearly visible on a coloured background below the transition temperature and becomes white/colourless above said temperature, as will become clear from the following detailed description of a specific embodiment thereof, which however must not be understood as being limiting, but only an example of the scope of the invention.

### DESCRIPTION OF THE FIGURES

Figure 1 shows a temperature indicator according to the invention as it appears at a temperature lower than the transition temperature;
Figure 2 shows a temperature indicator according to the invention as it appears at a temperature higher than the transition temperature;
Figures 3 show schematically the successive steps for production of a temperature indicator according to the invention.

### A) COMPOSITION

The active substances which form the device may comprise the following compounds and materials:
1) Leuco dyes with a thermochromic effect for the active part of the device, described under points C4 and C8 of the following paragraph C, relating to the characteristics of the device; they are formulated in the form of a mixture, microencapsulated and mixed in water-based acrylic binders in concentrations of between 10% and 40%;
2) Acrylic based binders for allowing mixing of the microencapsulated thermochromic mixtures, suitable for deposition on the substrates provided;
3) Polypropylene, polyethylene, polyester for the indicator substrate; this substrate may be transparent or opaque, and in this case preferably white.
4) Solvent-based inks chosen from acrylic or polyurethane inks, for defining the symbols of the indicator which define its correct operation in addition to the symbols which determine its traceability;
5) Adhesive for allowing fixing of the indicator to the walls of the refrigerator, chosen from solvent and water based acrylic derivatives with a high bonding power.

### B) PRODUCTION METHODS

1) All the components which form the thermochromic mixtures composed of thermochromic pigments (leuco dyes) are formulated so as to obtain the specific transition temperature required for these thermometers and subsequently are microencapsulated so as to obtain water-based slurries (mixes) where the concentration of the microcapsules is equal to 40% to 50%;
2) These slurries are then subsequently mixed with water-based binders, such as those described under point A2, stabilizing the mixture at room temperature and adding additives which make it suitable for printing by means of silkscreen printing and flexography machines in sheet form or continuously;
3) Once the microcapsules have been mixed in the various binders, deposition is performed, on the substrates, of the definition inks chosen from among those described under point A4 for printing the symbol which, together with the thermochromic active part, indicates correct operation of the refrigerators;
4) After deposition of the definition inks, the thermochromic/binder mixtures are printed with the aim of obtaining a homogeneous layer, while checking the thickness, so as to avoid substantial differences in the colouring which must be as homogeneous and uniform as possible for each processing batch; a different thickness may also mean a deviation of a few tenths of a degree in the transition temperature of the thermometer;
5) After depositing the layer of thermochromic material, the whole assembly must be rendered impermeable. For this reason preferably solvent-based ink is printed on top of the thermochromic layer and makes the layer impermeable, said ink being chosen from the inks described under point A4;
6) After all the inks have dried the treated substrates are combined with an adhesive film which allows the thermometer to be fixed onto the refrigerator, even in wet conditions;
7) All the silkscreen printing or flexography operations must be carried out in the absence of UV rays which cause a deterioration of the thermochromic materials;
8) With the final punching operation it is possible to obtain the thermometer in the form of a label, in the required format, which may have any geometric shape, size and profile;
9) Further operations consist in the final quality control and packaging.

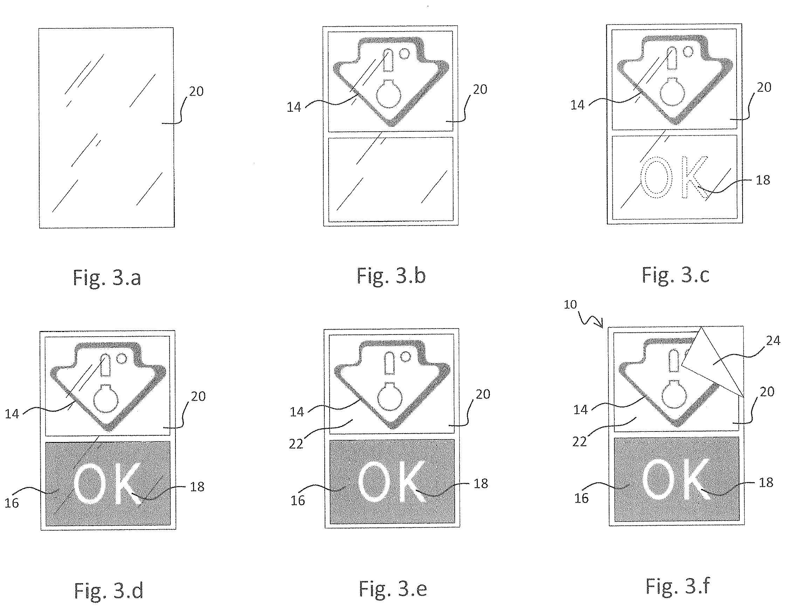

A possible method for the production of an embodiment of the temperature indicator according to the invention is described below, with particular reference to Figures 3.a to 3.f.

Figure 3.a shows a substrate 20 formed with a film consisting of a polymer chosen from polypropylene, polyethylene, polyester and the like. The hatching lines in the figure indicate that this substrate is transparent.

Figure 3.b shows the support 20 on which a signal 14 indicating the functioning state of the device has been printed. The signal 14 is printed with permanent colour ink which provides a marked contrast with the background which will be applied subsequently. This ink may be preferably solvent-based and chosen from among acrylic and polyurethane inks.

Figure 3.c shows the substrate 20 with the signal 14 on which a symbol 18 intended to provide an indication regarding correct operation of the refrigerating apparatus is printed. The symbol 18 is printed with an ink of a colour which is as close as possible to that of the background which will be applied subsequently. In Figure 3.c the symbol 18 is shown in dashed lines since otherwise it would be indistinguishable from the background of the figure.

Figure 3.d shows the substrate 20 with the signal 14 and the symbol 18, on which an area 16 of thermochromic material is provided. For greater clarity, the area is shown as it appears at a temperature lower than the transition temperature.

Figure 3.e shows the substrate 20 with the signal 14, the symbol 18 and the layer 16, on which a background 22 has also been printed. The background 22 is printed with an ink of a colour which is as close as possible to that of the symbol 18 which was previously applied. It should be noted that the device is no longer transparent. The background 22 defines the overall colour of the temperature indicator 10. Moreover, the fact that it is preferably obtained by means of a solvent, acrylic or polyurethane based ink means that the temperature indicator 10 is impermeable.

Figure 3.f shows the substrate 20 with the signal 14, the symbol 18, the area 16 and the background 22 on which an adhesive 24 for allowing fixing of the indicator has been applied. The adhesive 24 is an adhesive with a high bonding power preferably chosen from among the water-based or solvent-based acrylic derivatives. In other words, Figure 3.f shows the temperature indicator 10 in its completed state.

Another possible production method which envisages the use of an opaque - for example white - substrate 20 will now be described. In this case the following will be applied thereon in order: the area 16 of thermochromic material, the symbol 18 with a colour which is as close as possible to that of the substrate 20, and the signal 14 with contrast effect. This embodiment requires then the application of a transparent and waterproofing layer on the side of the substrate on which the thermochromic material, symbol 18 and signal 14 have been applied, while the adhesive 24 will be applied on the opposite side.

### C) CHARACTERISTICS AND MODE OF OPERATION

The device produced on the basis of the indications given in the above paragraphs A) and B) has the following characteristics and operating features:
1) The temperature for transition from the coloured to colourless state and vice versa may be a value lying between -20°C and + 15°C;
2) This area is identified by a legible symbol 18 with a colour which is again identical to the colour of the background (for example white), provided in a visible and indelible manner, in letter or graphics form. This symbol 18, together with a single change of colour of the thermochromic active part of the background underneath the legible symbol (from any colour to a colourless state and vice versa), indicates the correct operating condition; in optimum operating conditions, the symbol 18 is legible in the coloured area 16 and disappears when the refrigerating apparatus is not functioning correctly, becoming of the colour of the background 22 (for example white).
3) Cholesteric or chiral nematic liquid crystal formulations are not used;
4) The change of colour is indicated by using formulations of thermochromic pigments which are commonly called Thermochromic Leuco Dyes (TLD). These mixtures are formulated in the temperature range of - 20°C to +15°C. By defining the doses of the various components of the mixture it is possible to formulate these mixtures at the required transition temperature or temperature ranges, these mixtures being then microencapsulated.
5) It does not contain mercury or other heavy metals;
6) The precision remains within the tolerance limits of ± 0.5°C;
7) The transition of the thermochromic material from the coloured to colourless state occurs within an interval.
8) The colours of the thermochromic pigments for formulation of the mixtures used for production of the temperature indicator are the following TLD colours: red, pink, magenta, vermilion, orange, yellow, green, blue, dark blue, violet, black and other colours derived therefrom, the doses of which are determined depending on the desired transition temperature.
9) The device is reversible;
10) The device has a minimum thermal inertia of at least 30 seconds, which is verified by means of thermal inertia tests which establish the efficiency thereof;
11) The transition temperature is calculated by reading the rising temperature, from below zero to room temperature. Preferably the temperature for transition from the coloured to colourless state lies between about 3°C and 9.5°C and even more preferably between 6.5°C and 8°C. Below the minimum temperatures the symbol is always visible, while above the maximum values it is colourless and the zone of the label which is temperature-sensitive is completely white. In the case of a normal domestic refrigerator, this transition temperature is set to 7 or 7.5°C ± 0.5°C.
12) The device comes with operating instructions which indicate the operating conditions and the temperature conditions for use;
13) It complies with the regulations governing food grade materials
14) It is free from plasticizers and bisphenol A;
15) At the time of use the indicator 10 is fixed inside domestic refrigerators or refrigerating apparatus by means of the adhesive layer 24 in optimum positions which have been verified by means of laboratory tests which satisfy the necessary requisites for this indicator.

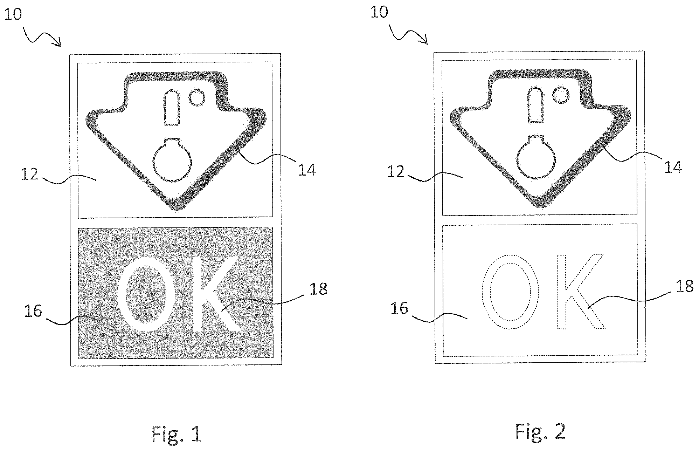

A non-limiting and illustrative example of a label for a domestic refrigerator produced in accordance with the present invention is shown in Figures 1 and 2, in which 10 denotes overall the temperature indicator (or label), 12 the area in which the signal 14 describing the function of the label is printed, 16 the area containing the layer of thermochromic material in which the symbol 18 (in this case "OK") appears coloured when the temperature is below the transition temperature, i.e. if operation of the apparatus is normal, and becomes colourless if the temperature is higher than the transition temperature. In Figure 2 the symbol 18 is shown in dashed lines since otherwise it would be indistinguishable from the background of the figure.

In accordance with a preferred embodiment, the label 10 has overall a white background 22 suitable for combination in a discrete and harmonious manner with the inner walls of most refrigerators. The signal 14 which describes the function of the label is typically printed with an ink having a permanent colour which is in marked contrast with the white background, for example a black ink. The symbol 18 (for example the word "OK") is typically printed with an ink having a permanent colour which is as close as possible to that of the background, in this case a white ink. The thermochromic material of the active part 16 may be preferably selected so that, below the transition temperature (i.e. in the condition where the refrigerator is operating correctly), it has a green colour. The colour green is in fact commonly associated with messages of a positive nature, which confirm a normal condition.

Below, operation of the temperature indicator 10 according to the invention is described in accordance with a possible embodiment thereof. Let us assume that the temperature indicator 10 is correctly applied inside a refrigerating apparatus and that this system is initially in equilibrium at a temperature lower than 0°C. The temperature indicator in these conditions has a colour (for example green) which is intense, well defined and clearly visible. The temperature of the system is then gradually increased. Assuming that the transition temperature of the indicator is 7°C and that its transition interval from the coloured to a colourless state is 1°C, the thermochromic pigments will maintain their intense and well defined colour until a temperature of about 6.5°C is reached. When the system reaches and exceeds this temperature, the colouring of the pigments starts to fade gradually until it definitively disappears at about 7.5°C. Once this temperature is exceeded, the pigments will remain colourless until the temperature drops again below the transition temperature.

As the person skilled in the art may readily understand, the transition range of the indicator (limits of the temperature interval within which the transition from a coloured state to a colourless state occurs) directly influences the reliability of the temperature indicator. The condition in which the pigments have a faded colour (neither fully coloured nor totally colourless) generates a condition of uncertainty on the part of the user as regards the correct temperature inside the refrigerator. The occurrence of this faded colour condition must therefore be reduced as far as possible and limited to a narrow range around the transition temperature. As the person skilled in the art may readily understand now, the present invention has the advantage of reducing this transition range to a minimum.

Finally, it should be pointed out that the device may be subject to numerous modifications, additions and/or replacements of parts, without thereby departing from the scope of protection thereof, as defined in the accompanying claims.

## Claims

1. Temperature indicator for a refrigerator, consisting of an adhesive label comprising the following components:
(i) Thermochromic Leuco Dye (TLD) pigments, in mixture and microencapsulated form, which change from a coloured to a colourless state at a transition temperature determined by the formulation of their mixture;
(ii) acrylic based binders to be mixed with said thermochromic pigments;
(iii) a transparent plastic based substrate for the indicator on which the mixtures of thermochromic pigments and binders are printed;
(iv) acrylic or polyurethane inks for defining the symbols of the indicator, highlighting the operating state thereof; and
(v) an adhesive for fixing the indicator to the walls of the refrigerator.

2. Indicator according to Claim 1, wherein the thermochromic pigments comprise formulations of mixtures of thermochromic leuco dyes (TLD) in the range of -20°C to +15°C, the temperature for transition from the coloured state to the colourless state being determined by the dosed amounts of the colours forming the mixture.

3. Indicator according to Claim 1 or Claim 2, wherein the temperature for transition of the thermochromic pigments from the coloured state to the colourless state lies between about 3°C and 9.5°C, and preferably between about 6.5°C and 8°C.

4. Indicator according to the preceding claims, wherein the substrate of transparent plastic material consists of polypropylene, polyethylene or polyester.

5. Indicator according to the preceding claims, wherein the acrylic or polyurethane inks, in addition to being used to define the symbols of the indicator are printed over the thermochromic layer in order to make it impermeable.

6. Indicator according to the preceding claims, wherein the adhesive for fixing the indicator comprises water and solvent based acrylic derivatives with a high bonding power.

## Patentansprüche

1. Temperaturanzeige für Kühlvorrichtung, bestehend aus einem Haftetikett, umfassend die folgenden Komponenten:
(i) thermochrome Leukofarbstoffpigmente in Mischung und mikrogekapselter Form, die bei einer Übergangstemperatur, bestimmt durch die Formulierung deren Mischung, von einem farbigen in einen farblosen Zustand wechseln;
(ii) acrylbasierte Bindemittel, die mit den thermochromen Pigmenten zu vermischen sind;
(iii) ein durchsichtiges kunststoffbasiertes Substrat für die Anzeige, auf das die Mischungen aus thermochromen Pigmenten und Bindemitteln aufgedruckt werden;
(iv) Acryl- oder Polyurethanfarben zum Definieren der Symbole der Anzeige, wobei deren Betriebszustand herausgestellt wird, und
(v) einen Klebstoff zum Fixieren der Anzeige an den Wänden der Kühlvorrichtung.

2. Anzeige nach Anspruch 1, wobei die thermochromen Pigmente Formulierungen von Mischungen thermochromer Leukofarbstoffe im Bereich von -20 °C bis +15 °C umfassen, wobei die Temperatur für den Übergang vom farbigen Zustand in den farblosen Zustand durch die dosierten Mengen der Farben, die die Mischung bilden, bestimmt wird.

3. Anzeige nach Anspruch 1 oder 2, wobei die Temperatur für den Übergang der thermochromen Pigmente vom farbigen Zustand in den farblosen Zustand zwischen ungefähr 3 °C und 9,5 °C und vorzugsweise zwischen ungefähr 6,5 °C und 8 °C liegt.

4. Anzeige nach den vorhergehenden Ansprüchen, wobei das Substrat aus durchsichtigem Kunststoffmaterial aus Polypropylen, Polyethylen oder Polyester besteht.

5. Anzeige nach den vorhergehenden Ansprüchen, wobei die Acryl- oder Polyurethanfarben, die zum Definieren der Symbole der Anzeige genutzt werden, zudem auf die thermochrome Schicht gedruckt werden, um diese undurchlässig zu machen.

6. Anzeige nach den vorhergehenden Ansprüchen, wobei der Klebstoff zum Fixieren der Anzeige Wasser und lösungsbasierte Acrylderivate mit einer hohen Bindekraft umfasst.

## Revendications

1. Indicateur de température pour appareil de réfrigération, consistant en une étiquette adhésive comprenant les composants suivants :
(i) des pigments de colorant leucodérivé thermochromique (TLD), sous forme de mélange et microencapsulée, qui varient d'un état coloré à un état incolore à une température de transition déterminée par la formulation de leur mélange ;
(ii) des liants à base d'acrylique à mélanger auxdits pigments thermochromiques ;
(iii) un substrat à base de plastique transparent pour l'indicateur sur lequel les mélanges de pigments thermochromiques et les liants sont imprimés ;
(iv) des encres acryliques ou polyuréthanes destinées à définir les symboles de l'indicateur, mettant en évidence l'état de fonctionnement de celui-ci ; et
(v) un adhésif pour fixer l'indicateur aux parois du réfrigérateur.

2. Indicateur selon la revendication 1, dans lequel les pigments thermochromiques comprennent des formulations de mélanges de colorants leucodérivés thermochromiques (TLD) allant de -20 à +15 °C, la température de transition de l'état coloré à l'état incolore étant déterminée par les quantités dosées des couleurs formant le mélange.

3. Indicateur selon la revendication 1 ou 2, dans lequel la température de transition des pigments thermochromiques de l'état coloré à l'état incolore se situe entre environ 3 et 9,5 °C, et de préférence entre environ 6,5 et 8 °C.

4. Indicateur selon les revendications précédentes, dans lequel le substrat constitué d'un matériau en plastique transparent consiste en du polypropylène, polyéthylène ou du polyester.

5. Indicateur selon les revendications précédentes, dans lequel les encres acryliques ou polyuréthanes, en plus d'être utilisées pour définir les symboles de l'indicateur, sont imprimées sur la couche thermochromique afin de la rendre imperméable.

6. Indicateur selon les revendications précédentes, dans lequel l'adhésif servant à fixer l'indicateur comprend de l'eau et des dérivés acryliques à base de solvant ayant un pouvoir de collage élevé.
